# EUROPEAN PATENT SPECIFICATION

(11) **EP 1 040 437 B1**
(45) Date of publication and mention of the grant of the patent: **05.03.2003**
(21) Application number: 98960013.5
(22) Date of filing: 15.12.1998
(51) Int. Cl.: G06F 17/60, G07F 7/10

(54) **DATA COMMUNICATIONS**
DATENÜBERTRAGUNGEN
COMMUNICATIONS DE DONNEES

(30) Priority: 15.12.1997 GB 9726484; 15.12.1997 EP 97310097
(43) Date of publication of application: 04.10.2000
(73) Proprietor: BRITISH TELECOMMUNICATIONS public limited company, London EC1A 7AJ (GB)
(72) Inventor: LEVERIDGE, Philip, Charles, Ipswich Suffolk IP5 1ED (GB)
(74) Representative: Roberts, Simon Christopher
(86) International application number: GB9803752
(87) International publication number: WO99031610

(56) References cited:
- EP-A- 0 801 479
- WO-A-97/03410
- WO-A-97/41539

## Description

This invention relates to data communications, and in particular, but not exclusively, to the retrieval of electronic goods such as World Wide Web ("Web") pages via a data communications network such as the Internet, and the charging therefor by the supplier thereof.

The charging of content on the Internet is known. It involves a transfer of financial information, such as credit card numbers, etc, over the Internet or the establishment of a periodically-billed account with the content provider. However, where the user wishes to access contents supplied by a number of different suppliers, or where a supplier wishes to supply contents to unknown individuals, these charging schemes have drawbacks. Users are hesitant to release personal financial information to many different suppliers, whereas content providers are hesitant to supply chargeable contents without the immediate settlement of the charge by the user or the establishment of a long-term credit arrangement with the user.

Another known system for the supply of chargeable content by a number of suppliers involves an intermediary which conducts the financial transaction with the user, and generates a "digital offer" which is treated as acceptable currency by a number of third party content providers. The content providers are periodically paid for their content by the intermediary. However, the third party content providers must use "commerce enabled" Web servers which are able to handle and decrypt the digital offers provided by the intermediary.

WO 97/03410 describes an Internet billing method in which an Internet access provider makes arrangements with vendors who wish to sell goods to customers of the provider, and the provider bills the customers for products and services purchased from the vendors. When a customer is connected to the Internet, the customer can interface with any of the vendors in order to find out about products or services offered by the vendors. The customer may then make a decision to order a product, an exchange of transaction information occurs between the customer and the vendor. This exchange includes information identifying the customer and information relating to the product or services to be purchased including the transaction amount, the manner and time of delivery and a reference number to identify that order. The transaction information is obtained by the provider, either by a separate transmission by the vendor or the customer to the provider, or by the provider extracting the information from the communication between the customer and vendor.

WO 97/41539 describes a system for secure network electronic payment and credit collection. An encrypted communication session is set up between a customer and a merchant, during which customer financial details are transmitted to the merchant. The merchant is not able to decrypt all the details. The merchant sets up a further encrypted communication session with a "payment gateway", whereby the customer financial details are confirmed and the payment authorised.

EP-A-0 801 479 describes a data network security system and method whereby communication of credit card or other sensitive information is effected by a separate independent connection between a user's Internet access provider and a content provider. The separate connection is over a public switched telephone network, rather than via the Internet.

In accordance with one aspect of the invention, there is provided a method of controlling user requests in a server system communicating with a user and a third party via a data communications system, said method comprising:
receiving a digital request for goods from said user via said data communications system;
passing on said request to said third party via said data communications system;
receiving a digital code relating to said goods from said third party via said data communications system;
setting in said server system a price value to be charged to said user for said goods in dependence on said code;
determining whether said goods are to be provided by said third party on the basis of said price value; and
arranging said goods to be provided by said third party if the result of said determination is positive.

In accordance with a further aspect of the invention, there is provided a method of providing goods to users communicating via a data communications system, said method comprising:
receiving at a first server system via said data communications system a digital request for goods from a second server system controlling requests originating from a user;
in response to the reception at the first server of the digital request, transmitting a digital code relating to said goods to said second server system via said data communications system; and
providing said goods if, after the transmission of the digital code, a confirmation of said request is received, by said first server system, from said second server system via said data communications system,
wherein said digital code refers to a price value, to be set by said second server system, to be charged to said user for said goods.

In embodiments of the invention, a gateway server can control access to the goods of third parties. In cases where the goods requested may not be desired by, or should possibly not be provided to, a user, a third party informs the gateway with a digital code allowing the gateway server to determine whether or not the goods are to be provided. Where a number of third parties are serviced by the gateway server, the users accessing the third party goods need only establish a relationship with the party controlling the gateway server, which in turn may establish individual relationships with each of the third parties.

Furthermore, an actual price to be charged to the user by a gateway may be varied by the gateway server, independently of any pricing arrangements made with or employed by a content provider. For example, a different charging scheme may be selected in the gateway server so as to alter the price which would be charged, for content associated with the same digital code, to the same user with time, thereby providing temporal flexibility in the price to be charged. Different charging schemes may also be selected in dependence on the user. This allows volume discounts, special offers, etc to be applied by the gateway server for selected users.

Further features and advantages of the present invention in its various aspects will be appreciated from the following description of a preferred embodiment of the invention, made with reference to the accompanying drawings
wherein:
Figure 1 is a block diagram schematically illustrating a data content retrieval system in accordance with an embodiment of the present invention;
Figure 2 is a block diagram schematically illustrating a portion of the arrangement of Figure 1 in greater detail;
Figure 3 is a flow diagram illustrating authentication procedures carried out between a user terminal and the gateway server of Figures 1 and 2;
Figure 4 is a flow diagram illustrating procedures carried out by a user terminal, a gateway server and a third party server during retrieval of documents by the user; and
Figure 5 is a flow diagram illustrating further procedures carried out by a client, a gateway server and a third party server for the retrieval of a document.

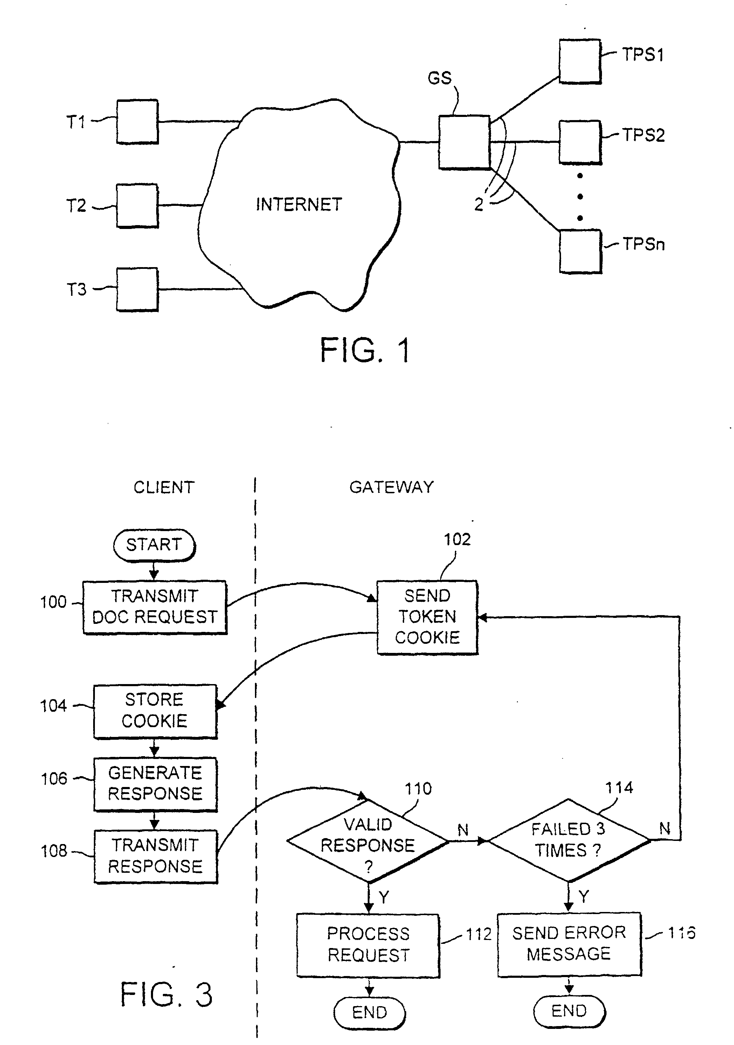

Figure 1 is a block diagram illustrating a data content retrieval system in accordance with an embodiment of the present invention. The system consists of a gateway server GS, and a plurality of third party servers TPS1, TPS2 ... TPSn. Three different examples of user terminal T1, T2, T3 are illustrated, each of which is connected to the system via a data communications network, in this embodiment the Internet.

The third party servers TPS1, TPS2 ... TPSn are remotely connected to the gateway server via secure communications links 2 (which may be separate physical links and/or logical links which use secure encryption during communications) and/or are co-located with the authentication server.

Each of the servers illustrated in Figure 1 may be implemented on a computing resource, such as a work station computer. Each of the user terminals T1, T2, T3, etc may be implemented in the form of a work station computer, a net computer, a mobile communications terminal, etc.

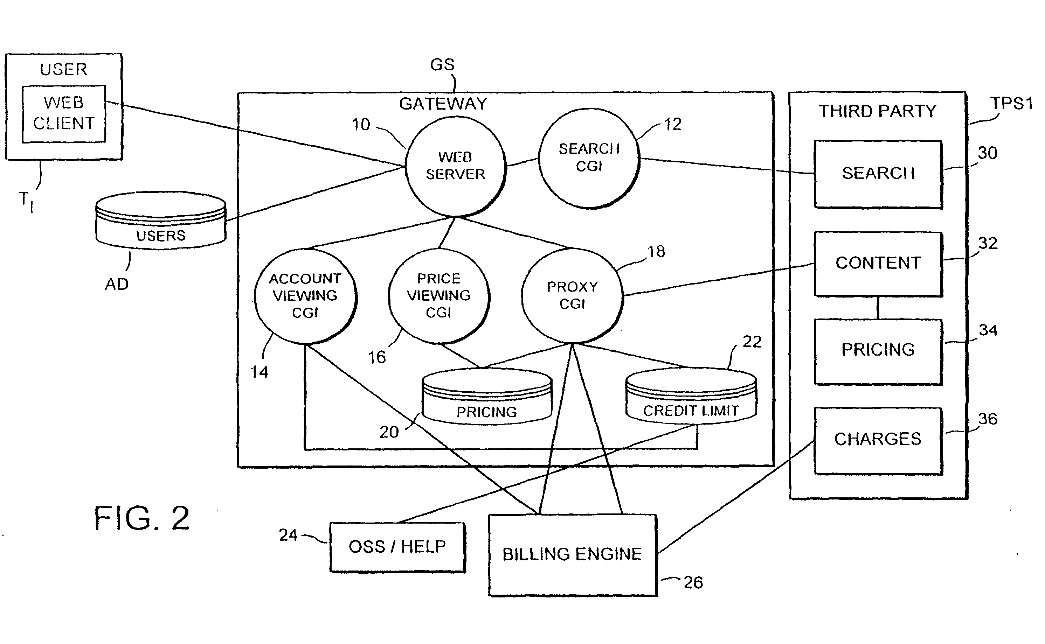

Figure 2 schematically illustrates further details of the data retrieval system, exemplifying a single user terminal T1 and a single third party server TPS1. Both the gateway server GS and the third party server TPS1 are servers, and the user terminal T1 is provided with application software in the form of a Web client, or browser, such as Netscape Navigator (trade mark) or Microsoft Internet Explorer (trade mark).

The gateway server GS includes software applications in the form of a Web server 10, a search command gateway interface (CGI) 12, an account viewing CGI 14, a price viewing CGI 16 and a proxy CGI 18. Also included is a pricing database 20 storing different charging schemes, a credit limit database 22 storing per-user credit limits, an operator control interface 24 and a billing engine 26. In addition, the gateway server is provided with an authentication database AD storing authentication details on a per-user basis.

The third party server TPS1 meanwhile includes a search engine 30, a content engine 32, a pricing database 34 and a charging database 36. The content engine 32 stores and transmits data including Web pages in response to requests from the gateway server. The pricing database stores price codes for each item of premium content stored on the content engine 32.

In order to access the gateway server GS, the Web client sends a request for a document over the Internet. In order to identify and locate a document in a Web server, files are identified by a universal resource locator (URL). The URL is structured to identify the service protocol (which in this embodiment is HTTP), the "domain" of the Internet server, the directory of the file in the Internet server, and the file name. A typical URL structure for documents on the gateway server is as follows:
HTTP://gatewaydomain/directory/filename

Thus, in order to retrieve a document directly from the gateway server, the Web client transmits an appropriate URL in which the domain is that of the gateway server.

On the other hand, a typical URL structure for documents on a third party server is as follows:
HTTP://thirdparty.gatewaydomain/directory/filename

Thus, the documents located on the third party server TPS1 are also identified and located using the domain of the gateway server. A document request is passed initially to the gateway server which passes the request on to the third party server in accordance with the third party specified in the URL.

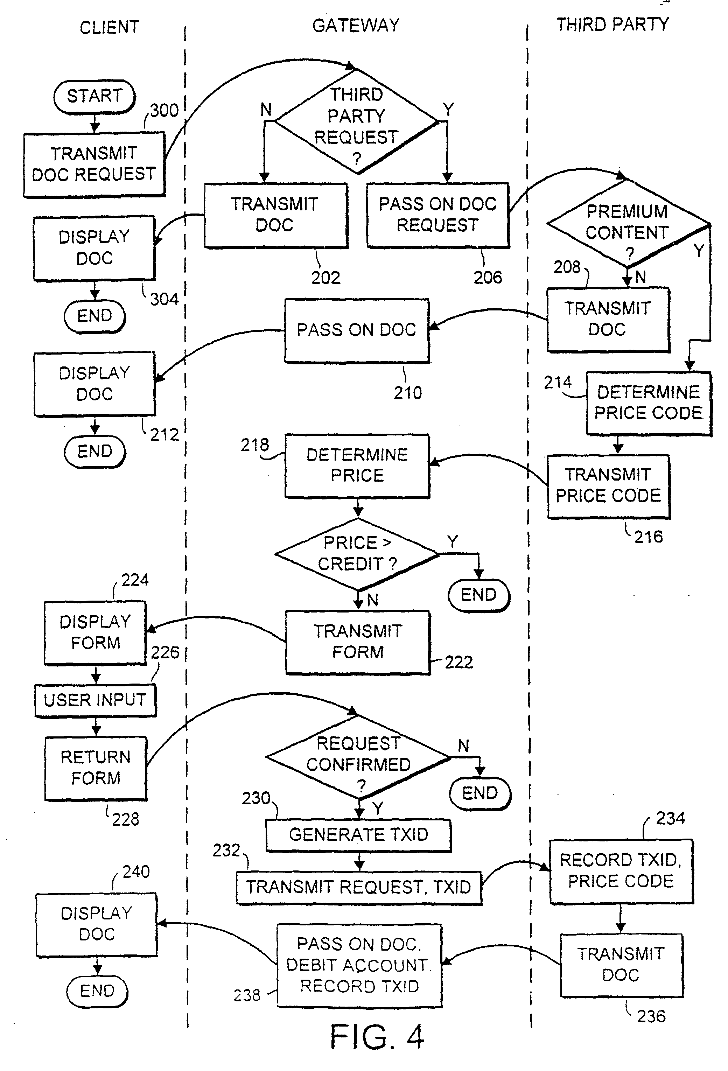

Figure 3 illustrates an authentication procedure carried out between the Web client and the gateway server GS. in the procedure illustrated, the user is initially not logged on (i.e. not yet authenticated).

The authentication procedure uses the Web-based functionality of "client-side persistent information", more commonly referred to as "cookies". Cookies may be sent from a Web server, embedded in a document sent on request by that server. On receiving a cookie, the Web client automatically stores the information in the cookie, and thereafter automatically transmits the information in a document request whenever the Web client attempts to retrieve a document from a server in the same domain as a server from which it received the original cookie. The Web client used in the present embodiment is a browser which supports cookies, such as those mentioned above.

Referring to Figure 3, in order to log on a user, the Web client transmits a document request (URL), step 100, to the gateway server. In response to the document request from a currently unauthenticated user, the gateway server generates a token, which consists of a large random number. That token is then sent to the client in the form of a token cookie, step 102. On receipt of the cookie, the client stores it, step 104, and performs an authentication algorithm using the token which it has just been sent, step 106. The authentication algorithm takes the user name and password entered by the user in the client terminal T1 and performs a one-way hashing function on those parameters in combination with the token. The result of the calculation is then transmitted back to the gateway server, step 108.

On receipt of the response from the client, the gateway server retrieves from the authentication database AD the password for the user and reperforms the authentication algorithm on the gateway server side using the token previously sent. If the response received and the independently-calculated algorithm result correspond, step 110, the user is marked as logged-on in the authentication database AD by storing the token against the user's record, and the original request is processed, step 112.

When the user is marked as logged-on in the authentication database AD, a timer is set in the authentication database for the user which eventually terminates the log on status of its user. Each time a document request is received from the user client containing a valid token cookie, the authentication database AD both confirms the current logged-on status of the user to the gateway server 10, and resets the users timer. Thus, if no document request is received from the logged-on user for a predetermined period of time, for example 5 minutes, the user is automatically logged-off such that when a document request is next received from the user containing the same token cookie, the user must reauthenticate.

If in step 110 the gateway server determines that no valid response is received, most probably due to the incorrect entering of the user's password, and if it is the first failure for the user, a failure flag is incremented once and the gateway server sends a new address token including the failure flag in a new cookie to the user client, step 102. Once the user has failed three times to authenticate, the gateway server sends an error message to the user client, indicating that the user will not be logged-on, step 116.

Once the user has authenticated, each request for a document either from the gateway server itself or from one of the third party servers TPS1, TPS2 ... TPSn will be treated as a request from a valid user, since the request will be accompanied by a cookie containing a token indicating that the user is currently logged-on. The gateway server on checking the token contained in the cookie accompanying the document request against the token recorded in the authentication database AD determines that the user is currently logged-on.

Figure 4 illustrates procedures carried out when an authenticated user requests a document either from the gateway server itself or from one of the third party servers, step 200.

If the request is directed at the gateway server itself, the gateway server transmits the requested document (an HTML Web page), step 202, to the client which parses and displays the document, step 204. Such a document may for example be a home page containing hypertext links to each of the third party servers.

If on the other hand the document request received by the gateway is intended for a third party server, the gateway server passes on the document request to the appropriate third party, step 206. The third party server then determines, from its pricing database 34, whether the document contains premium content, that is to say whether the document is to be charged for. If not, the document (an HTML Web page) is transmitted, step 208. The gateway server passes on the document, step 210, and the document is parsed and displayed at the client terminal, step 212.

If on the other hand the third party content document is to be charged for, the third party server determines from the pricing database 34 which of a plurality of price codes the document has been allocated. These price codes are predetermined by the party controlling the gateway server and are commonly used by all third party servers. The third party server then returns an HyperText Transfer Protocol (HTTP) "402" error message (defined as "payment required" in RFC 2068) including the price code for the requested document to the gateway server, step 216.

On receipt of the HTTP "402" error message, containing the price code from the third party, the proxy CGI 18 selects one of a plurality of charging schemes held in the pricing database 20, in dependence on the user identity and/or the current date/time, and sets a price to be charged to the user as determined by the selected charging scheme, step 218.

The Table below indicates an exemplary format of entries in the pricing database 20 which is used by the proxy CGI 18 to set the price to be charged to the user on receipt of different price codes PC1 and PC2. In this embodiment, the price to be charged to a user for the goods corresponding to the price codes depend both on a user category to which the user receiving the goods belongs, and the current date. In the example given in the Table, there are three user categories A, B and C. There are three date/time limits illustrated in the table, being X, Y and Z. Prices L, M, N, R S and T are valid for the period spanning from X until Y. Prices 0, P, Q, U, V, W are levied on receipt of the same price codes PC1, PC2 but received at different times, namely within the period spanning from Y to Z.

| **PRICE CODE** | **USER CATEGORY** | **VALID FROM** | **VALID TO** | **PRICE** |
|---|---|---|---|---|
| PC1 | A | X | Y | L |
| PC1 | B | X | Y | M |
| PC1 | C | X | Y | N |
| PC1 | A | Y | Z | O |
| PC1 | B | Y | Z | P |
| PC1 | C | Y | Z | Q |
| PC2 | A | X | ' Y | R |
| PC2 | B | X | Y | S |
| PC2 | C | X | Y | T |
| PC2 | A | Y | Z | U |
| PC2 | B | Y | Z | V |
| PC2 | C | Y | Z | W |

The proxy CGI 18 may be informed of the user category by means of a user database associated with a gateway server, for example the billing database held in the billing engine 26. The user categories may be used to apply different levels of discount awarded by the operator of the gateway server.

As will be evident from the Table, a plurality of prices charged to users may correspond with a price code. For example, six different prices L, M, N, O, P and Q may be charged for content associated with a single price code PC1 in the pricing database 34 of the third party server. The charging scheme in this example is selected both on the basis of a user category and a current date/time. In alternative embodiments, the price levied to a user on receipt of a price code from a third party server may vary solely on the basis of the identity of the user or the current date/time or a combination of parameters (including those mentioned thus far) may be used to determine the price to be charged to the user.

In the description relating to the Table, the proxy CGI looks up a price to be charged to the user on the basis of the price code and a further parameter. In a further alternative, the price to be charged may be set only by looking up a price which corresponds directly with a price code from the pricing database 20. This one-to-one look-up in the gateway server still allows the price to be varied with time, by altering the price entries in the pricing database which correspond to each price code.

As an alternative, the proxy CGI may calculate a price to be charged to the user by applying a pricing formula associated with the price code in the pricing database 20.

Next, the proxy CGI checks each of one or more credit limits held for the user in credit limit database 22 to ensure the acceptability of the goods purchase. These credit limits may include a credit limit set by an administrator of the gateway server and/or a limit set by an administrator acting on behalf of the user. Providing the credit limit will not be exceeded by the purchaser, the proxy CGI generates an HTML form displaying the price to be charged requesting confirmation of the order and transmits it to the client terminal, step 222.

The client terminal parses and displays the HTML form, step 224, requesting the user to confirm or reject the order, step 226. Alternatively, the Web client application may be preconfigured to reject any documents which are to be charged for, or documents exceeding a certain price. The filled-in form is then returned by the Web client, step 228.

At the gateway server, if the form returned rejects the order, the gateway closes the connection with the third party and no further interaction occurs until a further request is originated from the client terminal. If on the other hand the form returned indicates a confirmation of the order, the proxy CGI generates a transaction identity (TXID), step 230, and transmits a document request (the URL of the premium content Web page) along with the transaction identity, step 232.

On receipt of a document request accompanied by a recognizable transaction identity from the gateway server, the third party server records the transaction identity and the price code for the document requested in its charging database, 36, and transmits the document (an HTML Web page) to the gateway server, step 236.

On receipt of the premium content Web page from the third party server, the gateway server debits the user's account and records the transaction identity against the user's account in the billing engine 26, step 238, for subsequent billing. The Web page itself is passed on to the Web client, step 240, which parses and displays the Web page.

In the procedure described above, the third party server checks with the gateway server in order to determine whether or not a premium content Web page is to be transmitted to the user. During the check, the third party need not have any knowledge relating specifically to the user requesting the premium content Web page. However, if desired one or more details relating to the user (for example, the user identity) may be passed to the third party server by the gateway server along with a document request, to allow the third party server to personalise the content of the Web page before transmission to the gateway server.

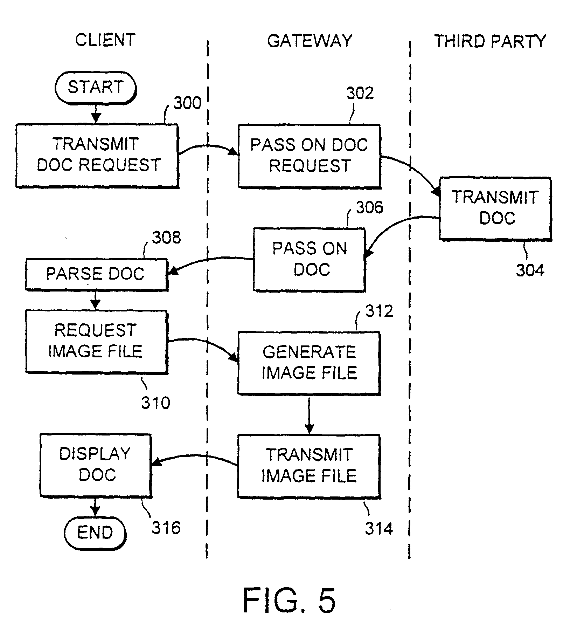

Figure 5 is a flow chart explaining the functionality provided by the price viewing CGI 16, enabling content to be customised by the gateway server. The price viewing CGI 16 uses a price code inserted into the HTML content of a third party Web page, and generates an image file containing a corresponding price, calculated by the gateway server, to be inserted into in the page supplied by the third party. The price viewing CGI takes the price code as an argument and returns the image file (a graphics interchange format or GIF) showing the price. The price shown in the image file is calculated in the same manner as the calculation carried out by the proxy CGI in step 218 of the negotiating process for ordering a premium content Web page as shown in Figure 4. Namely, a charging scheme is selected depending on the identity of the user and/or the date/time, and a corresponding charging algorithm is used to convert the price code into an actual price to be displayed.

Referring to Figure 5, the client terminal initiates the procedure by transmitting a document request from an authenticated user and intended for the third party server, step 300, which is received at the gateway server and passed on to the third party server, step 302. The third party server in return transmits the document, step 304. As will be appreciated, if the document is a premium content page, steps 214 to 234 as illustrated in Figure 4 are carried out before the document is transmitted in step 304. The document transmitted in step 304 contains primary content in the form of an HTML page, a line of HTML including a price or product code. This may be an HTML line such as:
<img src = "http://gatewaydomain/cgi-Bin/VIEWPRICE.cgi?code =014">

This HTML line indicates that an image file is to be retrieved from the gateway server which will provide a price, in the form of an image generated or selected by the price viewing CGI 16 depending on the price code, which in the example given above is O14.

On receipt of the document, the gateway server passes the document directly to the client terminal, step 306. At the client terminal, the Web client application parses the HTML, step 308. On parsing the HTML line described above, the Web client requests the image file from the gateway server, step 310.

On receiving the request, the gateway server converts the price code contained in the image file request to a GIF image file displaying the corresponding price for that user, step 312, and returns it to the user client, step 314. The client terminal then displays the entire Web page, step 316, including the primary content received directly from the third party and the secondary content in the form of the image file displaying the price received from the gateway server. The page itself may for example be a home page for the third party server, which includes hypertext links to one or more of its premium content Web pages, the price to be charged being displayed as an image (or simply text) next to the hypertext link.

The use of the functionality illustrated in Figure 5 provides a flexible pricing capability without the need for the gateway server to parse all third party Web pages for specific meta-characters relating to the price. Furthermore, the functionality allows the gateway server not only to define the prices to be displayed in dependence on the user and/or the date/time, but may also define the format of prices to be displayed in dependence on the user and/or the date/time if desired.

The account viewing CGI 14 interfaces with the billing engine 26 to enable a user to view all premium content charges in their account from any or all of the third party content providers at the same time. In addition, the account viewing CGI allows an administrator acting on behalf of the user to alter the user-defined credit limit stored in the database 22.

The search CGI 12 enables a user to conduct a search across one or more of the third party servers connected to the gateway server. The search CGI retrieves information from each third party search engine 30 and reformats the information into a common format for presentation to the user.

A whole host of variations could be employed in relation to the embodiment described above.

Although in the above the code transmitted by the third party server in relation to an item of premium content describes a pricing characteristic of the content, it is envisaged that similar functionality could be used to encode other characteristics of the content. For example, the code may signify the minimum age of a person to whom the content is addressed, whereas the gateway server maintains age details of its user base. Thereby, the gateway server could act to filter content to ensure that the age of the user is taken into account before the content is passed on to the user. If the material is inappropriate for the age of user concerned, as indicated by what in that case would be an age code, the gateway server may block the content before it reaches the user.

Although in the above embodiment the unit of content to which the price code and charge is attached is a single Web page, the unit of content may be measured differently, for example, it may consist of a number of Web pages or a duration of access to a range of content on any particular third party server.

A particular advantageous authentication scheme utilising the functionality of cookies is used in the above embodiment. However, other Web-based authentication schemes may also be used by the gateway server in order to authenticate users before access to premium content on third party servers is granted.

It is envisaged that further variations and alternatives may be employed without departing from the scope of the present invention which is defined in the accompanying claims.

## Claims

1. A method of controlling user requests in a server system (GS) communicating with a user and a third party via a data communications system, said method comprising:
receiving a digital request (300) for goods from said user via said data communications system;
passing (206) on said request to said third party via said data communications system;
receiving a digital code (216) relating to said goods from said third party via said data communications system;
setting (218) in said server system a price value to be charged to said user for said goods in dependence on said code;
determining (222-228) whether said goods are to be provided by said third party on the basis of said price value; and
arranging (236-240) said goods to be provided by said third party if the result of said determination is positive.

2. A method according to claim 1, comprising receiving a further digital request and setting a different price value to be charged to a user on receipt of the same digital code.

3. A method according to claim 1 or 2, wherein said price value is derived from said code by said server system with reference to a pricing database.

4. A method according to claim 1, 2 or 3, wherein said determining step comprises referring to an acceptance criterion set for said user.

5. A method according to claim 4, wherein said acceptance criterion is a monetary limit.

6. A method according to any preceding claim, wherein said determining step comprises transmitting said price value to said user and requesting a confirmation response from said user.

7. A method according to any preceding claim, wherein said price value is derived from said code by a selected charging scheme.

8. A method according to claim 7, comprising selecting said charging scheme in dependence on the user.

9. A method according to claim 7 or 8, comprising selecting said charging scheme in dependence on a time value.

10. A method according to any preceding claim, comprising performing authentication of said user before said passing on step.

11. A method according to any preceding claim, wherein said goods comprise electronic goods.

12. A method according to any preceding claim, wherein said data communications system is an Internet-based system.

13. A method according to claim 12, wherein said code is transmitted from said third party in an HTTP message.

14. A method of providing goods to users communicating via a data communications system, said method comprising the steps of:
receiving at a first server system (TPS1) via said data communications system a digital request (300) for goods from a second server system (GS) controlling requests originating from a user;
in response to the reception at the first server of the digital request, transmitting a digital code (216) relating to said goods to said second server system via said data communications system; and
providing (236-240) said goods if, after the transmission of the digital code, a confirmation (232) of said request is received, by said first server system, from said second server system via said data communications system,
wherein said digital code corresponds to a price value, to be set by said second server system, to be charged to said user for said goods.

## Patentansprüche

1. Verfahren zum Steuern von Anwenderanforderungen in einem Server-System (GS), das mit einem Anwender und mit einem dritten Teilnehmer über ein Datenkommunikationssystem kommuniziert,
wobei das Verfahren umfaßt:
Empfangen einer digitalen Anforderung (300) für Güter vom Anwender über das Datenkommunikationssystem;
Weiterleiten (206) der Anforderung an den dritten Teilnehmer über das Datenkommunikationssystem;
Empfangen eines digitalen Codes (216), der auf die Güter bezogen ist, vom dritten Teilnehmer über das Datenkommunikationssystem;
Festsetzen (218) eines Preises, mit dem der Anwender für die Güter belastet wird, in Abhängigkeit von dem Code in dem Server-System;
Bestimmen (222-228) auf der Grundlage des Preises, ob die Güter vom dritten Teilnehmer bereitgestellt werden sollen; und
Anordnen (236-240) der durch den dritten Teilnehmer bereitzustellenden Güter, falls das Ergebnis der Bestimmung positiv ist.

2. Verfahren nach Anspruch 1, das das Empfangen einer weiteren digitalen Anforderung und das Festsetzen eines anderen Preises, mit dem ein Anwender belastet werden soll, wenn derselbe digitale Code empfangen wird, umfaßt.

3. Verfahren nach Anspruch 1 oder 2, bei dem der Preis aus dem Code durch das Server-System unter Bezugnahme auf eine Preisfestsetzungsdatenbank abgeleitet wird.

4. Verfahren nach Anspruch 1, 2, oder 3, bei dem der Bestimmungsschritt die Bezugnahme auf ein für den Anwender festgesetztes Akzeptanzkriterium umfaßt.

5. Verfahren nach Anspruch 4, bei dem das Akzeptanzkriterium eine monetäre Grenze ist.

6. Verfahren nach einem vorhergehenden Anspruch, bei dem der Bestimmungsschritt das Senden des Preises zum Anwender und das Anfordern einer Bestätigungsantwort vom Anwender umfaßt.

7. Verfahren nach einem vorhergehenden Anspruch, bei dem der Preis aus dem Code durch ein ausgewähltes Belastungsschema abgeleitet wird.

8. Verfahren nach Anspruch 7, das das Auswählen des Belastungsschemas in Abhängigkeit vom Anwender umfaßt.

9. Verfahren nach Anspruch 7 oder 8, das das Auswählen des Belastungsschemas in Abhängigkeit von einem Zeitwert umfaßt.

10. Verfahren nach einem vorhergehenden Anspruch, das das Ausführen einer Authentifizierung des Anwenders vor dem Weiterleitungsschritt umfaßt.

11. Verfahren nach einem vorhergehenden Anspruch, bei dem die Güter elektronische Güter umfassen.

12. Verfahren nach einem vorhergehenden Anspruch, bei dem das Datenkommunikationssystem ein System auf Internetbasis ist.

13. Verfahren nach Anspruch 12, bei dem der Code von der dritten Partei in einer HTTP-Nachricht gesendet wird.

14. Verfahren für die Bereitstellung von Gütern für Anwender, die über ein Datenkommunikationssystem kommunizieren, wobei das Verfahren die folgenden Schritte umfaßt:
Empfangen einer digitalen Anforderung (300) für Güter von einem zweiten Server-System (GS), das von einem Anwender ausgehende Anforderungen steuert, bei einem ersten Server-System (TPS1) über das Datenkommunikationssystem;
in Reaktion auf den Empfang der digitalen Anforderung beim ersten Server Senden eines digitalen Codes (216), der auf die Güter bezogen ist, über das Datenkommunikationssystem zum zweiten Server-System; und
Bereitstellen (236-240) der Güter, falls nach dem Senden des digitalen Codes eine Bestätigung (232) der Anforderung vom zweiten Server-System durch das erste Server-System über das Datenkommunikationssystem empfangen wird,
wobei der digitale Code einem Preis entspricht, der vom zweiten Server-System festgelegt wird und mit dem der Anwender für die Güter belastet werden soll.

## Revendications

1. Procédé de contrôle des demandes utilisateur dans un système serveur (GS) communiquant avec un utilisateur et une tierce partie via un système de communications de données, ledit procédé consistant à :
recevoir une demande numérique (300) de marchandises provenant dudit utilisateur via ledit système de communications de données ;
transmettre (206) ladite demande à ladite tierce partie via ledit système de communications de données ;
recevoir un code numérique (216) relatif auxdites marchandises provenant de ladite tierce partie via ledit système de communications de données ;
fixer (218) dans ledit système serveur une valeur de prix devant être imputée audit utilisateur pour lesdites marchandises en fonction dudit code ;
déterminer (222-228) si lesdites marchandises vont être fournies par ladite tierce partie sur la base de ladite valeur de prix ; et
agencer (236-240) lesdites marchandises devant être fournies par ladite tierce partie si le résultat de ladite détermination est positif.

2. Procédé selon la revendication 1, comprenant la réception d'une autre demande numérique et la fixation d'une valeur de prix différente à imputer à un utilisateur à réception du même code numérique.

3. Procédé selon la revendication 1 ou 2, dans lequel ladite valeur de prix est dérivée dudit code par ledit système serveur en se référant à une base de données de prix.

4. Procédé selon la revendication 1, 2 ou 3, dans lequel ladite étape de détermination comprend la référence à un critère d'acceptation établi pour ledit utilisateur.

5. Procédé selon la revendication 4, dans lequel ledit critère d'acceptation est une limite monétaire.

6. Procédé selon l'une quelconque des revendications précédentes, dans lequel ladite étape de détermination comprend la transmission de ladite valeur de prix audit utilisateur et la demande d'une réponse de confirmation de la part dudit utilisateur.

7. Procédé selon l'une quelconque des revendications précédentes, dans lequel ladite valeur de prix est dérivée dudit code par un programme de paiement sélectionné.

8. Procédé selon la revendication 7, comprenant la sélection dudit programme de paiement en fonction de l'utilisateur.

9. Procédé selon la revendication 7 ou 8, comprenant la sélection dudit programme de paiement en fonction d'une valeur de temps.

10. Procédé selon l'une quelconque des revendications précédentes, comprenant l'authentification dudit utilisateur avant de passer par cette étape.

11. Procédé selon l'une quelconque des revendications précédentes, dans lequel lesdites marchandises comprennent des marchandises électroniques.

12. Procédé selon l'une quelconque des revendications précédentes, dans lequel ledit système de communications de données est un système basé sur Internet.

13. Procédé selon la revendication 12, dans lequel ledit code est transmis par ladite tierce partie dans un message HTTP.

14. Procédé consistant à fournir des marchandises à des utilisateurs communiquant via un système de communications de données, ledit procédé consistant à :
recevoir, au niveau d'un premier système serveur (TPS1) via ledit système de communications de données, une demande numérique (300) de marchandises provenant d'un second système serveur (GS) contrôlant les demandes émises par un utilisateur ;
en réponse à la réception au niveau du premier serveur de la demande numérique, transmettre un code numérique (216) concernant lesdites marchandises audit second système serveur via ledit système de communications de données ; et
fournir (236-240) lesdites marchandises si, après la transmission du code numérique, une confirmation (232) de ladite demande est reçue, par ledit premier système serveur, à partir dudit second système serveur via ledit système de communications de données,
dans lequel ledit code numérique correspond à une valeur de prix devant être fixée par ledit second système serveur et devant être imputée audit utilisateur pour lesdites marchandises.
